# EUROPEAN PATENT SPECIFICATION

(11) **EP 2 009 174 B1**
(45) Date of publication and mention of the grant of the patent: **13.01.2010**
(21) Application number: 08380178.7
(22) Date of filing: 18.06.2008
(51) Int. Cl.: D06F 93/00

(54) **Garment collection machine for a laundry**
Kleidungssammelmaschine für eine Wäscherei
Machine de collecte de vêtements pour blanchisserie

(30) Priority: 18.06.2007 ES 200701679
(43) Date of publication of application: 31.12.2008
(73) Proprietor: Zalbide Elustondo, Pedro, 20305- Irún, Guipúzcoa (ES)
(72) Inventor: Zalbide Elustondo, Pedro, 20305- Irún, Guipúzcoa (ES)
(74) Representative: Carvajal y Urquijo, Isabel

(56) References cited:
- US-A- 3 327 942
- US-A- 4 036 365
- US-A1- 2002 112 994

## Description

### Field of the Invention

The present invention is comprised in the field of product collection systems with RFID identification generally in bag mode and especially for garments for a laundry, a similar collection system, however without any RFID identification means, is disclosed e.g. by document US-A-4036365. The system integrates an RFID (Radio Frequency Identification) reader to automatically know the products returned by a certain user as he or she places them in the collection unit, as each product or garment has an RFID tag attached (with or without information, such as the type of garment, color, etc.), allowing the user to move the products if there are reading problems. It in turn incorporates an automatic system for detecting foreign elements (such as pens, clips, etc.) to prevent problems in subsequent processes (laundering...).

This system is preferably used to return dirty garments (in hospitals, companies, etc.).

### Background of the Invention

There are currently garment return environments with RFID antennas but they have several problems: they are very expensive; they cannot be integrated in a machine because they are of the installation type; they do not check external elements (pens or other objects which may have been introduced in the clothes); they do not ensure 100% the reading upon delivering the garments because the user cannot move the products with his or her hand until he or she reads the RFID cards.

The present invention attempts to solve the listed problems by means of using an RFID antenna and sensors or detectors of foreign parts in a rotating drum or in a linear movement box with the sensors on the upper and lower sides.

### Description of the Invention

The invention relates to a garment collection machine for a laundry according to claim 1. Preferred embodiments are defined in the dependent claims.

In the present invention each garment has an RFID tag for its identification. The garment collection machine comprises:
- a garment collection unit in which the user introduces the garments to be returned when said unit is in a garment return position;
- drive means for driving the garment collection unit;
- an RFID reader in charge of reading the RFID tags of the garments introduced by the user in the garment collection unit;
- data processing means receiving the information from the RFID reader and counting the garments read, the garment collection machine indicating to the user the number of garments read by the RFID reader;
- confirmation means through which the user confirms the correct count of the garments read by the machine and initiates the process for returning the garments, whereby the unit is positioned in an anomaly detection position;
- detection means located in the garment collection unit, which detect, once the process for returning garments has been initiated, an anomalous situation in the garments introduced, the machine positioning the garment collection unit in a garment return position in the event of detection of an anomalous situation;
- a garment collection container, located below the garment collection unit.

Once the process for returning garments has been initiated and in the event that an anomalous situation has not been detected, the garment collection unit is driven by the drive means, the garments being deposited in the garment collection container.

The garment collection unit can consist of a drum that is partially discontinuous in a section, the user introducing the garments to be returned through such discontinuity. In this case, the drive means for driving the drum comprise an electric motor causing a rotation of the drum when said means are activated and in the event that an anomalous situation is detected, the drum rotates until placing its discontinuous section facing the garment collection container. Once the process for returning the garments has been initiated, the drum rotates such that the continuous section of the drum is oriented, preventing the user from being able to extract any previously introduced garment. It is also possible to first close the opening by means of a gate and subsequently rotate the drum in the event that the anti-theft security is to be increased during the return. The RFID reader is preferably placed in the lower part of the drum when the latter is in the garment return position.

The garment collection unit can also consist of a horizontally arranged box without a base, such that once the process for returning garments has been initiated, the box moves horizontally on runners by the action of the drive means, until depositing the garments in the garment collection container.

The detection means can comprise at least one of the following means:
- magnetic detection means, the machine considering that there is an anomalous situation when said magnetic detection means detect the presence of metal elements among the introduced garments;
- means for weighing the content of the garment collection unit, the machine considering that there is an anomalous situation when an introduced garment weighs less than a previously established value.

The machine can have user authentication means configured so that once the user has been authenticated, he or she can initiate the process for returning garments. In the case of the drum, once the user is authenticated, the machine rotates the drum from an initial position in which its continuous section faces the user, to the garment return position. In the case of the box, once the user is authenticated, the machine moves the box horizontally from an initial position in which one of its side walls faces the user, to the garment return position.

The machine can additionally have data input means by means of which the user can select any special characteristic of the garments.

### Brief Description of the Drawings

A series of drawings is very briefly described below which aid in better understanding the invention and are expressly related to an embodiment of said invention which is set forth as a non-limiting example thereof.

Figures 1A, 1B, 1C, 1D show, for a particular embodiment, in a schematic side section view of the garment collection machine, the different positions of the garment collection drum during the process for returning garments.

Figure 2 shows a front view of the garment collection machine.

Figures 3A, 3B, 3C show, for another particular embodiment, in a schematic side section view of the garment collection machine, the different positions of the garment collection box during the process for returning garments.

### Description of a Preferred Embodiment of the Invention

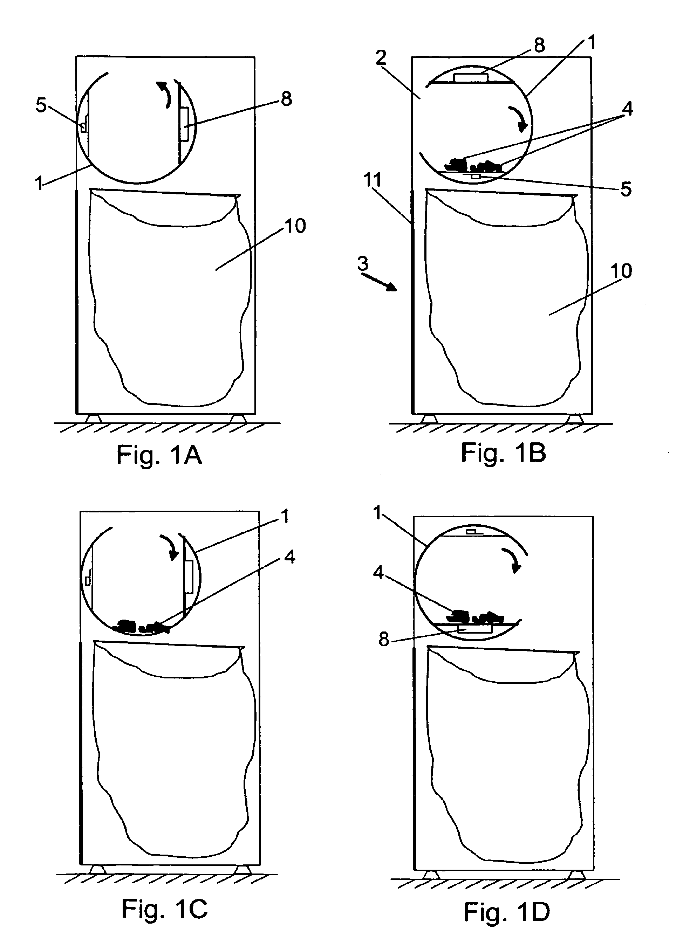

Figures 1A, 1B, 1C, 1D show a side section view of the garment collection machine 3. Said machine 3 comprises a garment collection unit 1, in this case a drum that is partially discontinuous in a section 2. through which the user returns the garments 4 for their washing. The drum is by default in a closed position, placing its wall facing the user such that the latter cannot access its interior. The drum is rotated by a motor, being able to rotate in both directions.

The drum is initially in the rest position indicated in Figure 1A, with the wall of the drum facing the user so that he or she cannot access the interior of the drum or introduce clothes. Once the user is authenticated, for example by means of a card or a code entered by a keyboard, and validated; the garment collection unit 1 rotates and places a hollow space facing the user, so that the user can provide the garments 4, passing to a garment return position, as shown in Figure 1B. As it places the garment or garments, the garment collection machine 3 reads, by means of the RFID reader 5, the RFID tags that the garments have incorporated therein. The RFID reader 5 is formed by an antenna and means for reading the received data from the RFID tags. Said RFID reader 5 is placed, at the time of introducing the garments, at the base of the drum and integral therewith, such that when the drum rotates the RFID reader rotates with it. For every RFID tag reading, the machine indicates correct reading, which makes it easy for the user to know if the garment has been read. This is very important, because RFID tags are sensitive to their position in relation to the antenna. In the event that correct reading is not indicated, the person moves the garment until the tag is read. The collection machine 1 uses the information of the RFID reader 5 and counts the number of different garments read. The collection system indicates to the user the number of garments 4 which it has read. If any garment 4 is not read, the user can move the garments until it reads them or take out the garments which it has not read.

If the user accepts the number of garments 4 read through confirmation means 7, for example by means of pressing a button, the drum rotates, preventing the user from being able to extract any garment in a subsequent phase, after the reading. According to the theft rate in certain fields of application, it is possible for an additional vertical gate to be activated or not before the rotation of the drum to increase even more the security of extraction of garments exactly at the time of the rotation. This drum rotates to certain positions according to the progress level of the program. As the drum rotates, the clothes pass close to detection means 8 measuring the weight, the presence of magnetic media, etc., or all of them at the same time, according to what is to be measured (for example, the detection means 8 can consist of a single metal detector). The control of the weighing can be used, for example, to check that the garments 4 delivered weigh, that not only the RFID tag is delivered.

The detection means 8 are positioned on the side of the drum opposite to the RFID reader, said detection means 8 also being integral with the drum and, therefore they rotate with it.

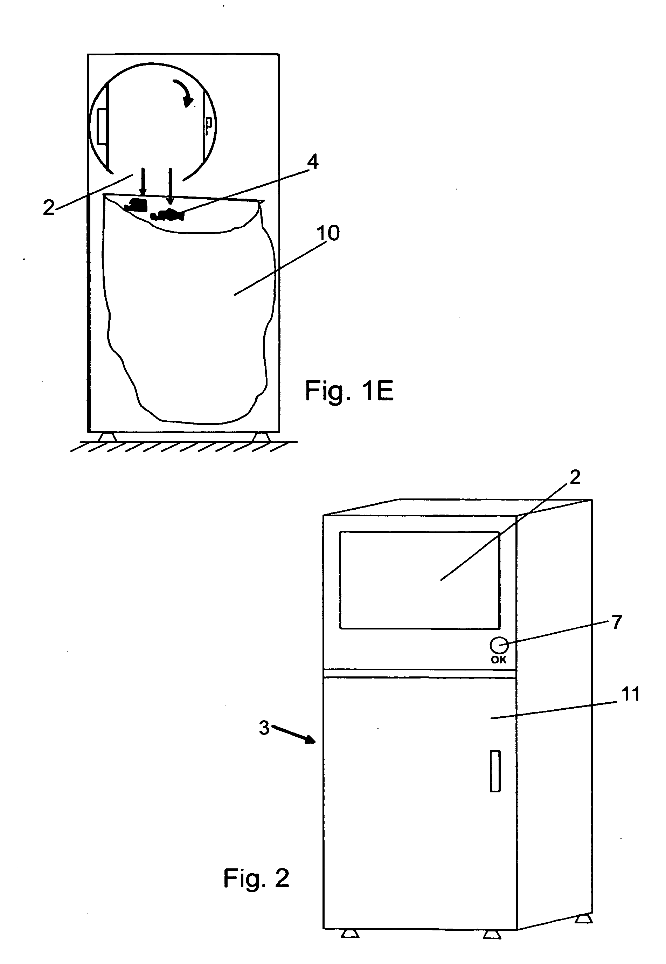

Before tipping the garments into the bag 10, the drum rotates until the clothes are in front of the detection means 8, as shown in Figure 1D. In the event that the measurements indicate nonconformity (metals are detected, the weight is not correct, etc.), the drum rotates in the opposite direction, returning to the position shown in Figure 1B, and inform the user so that he or she removes the hazardous elements from the garments 4, repeating the previous garment acceptance process. In the event that everything is finally correct and metals,... are not detected, the drum continues rotating until it places its discontinuous section 2 facing the floor, at which time the garments 4 fall due to the effect of gravity, as shown in Figure 1E to a garment collection container 10 (a bag, for example) at the lower part of the machine.

Therefore, the different positions of the drum are the following:
- Position of the drum 0° (see Figure 1B): Start position, with the hollow space facing the user so that he or she can introduce the clothes 4 in the drum. The RFID tags of the clothes 4 are read. When the user accepts the reading of the machine 3 by means of pressing confirmation means 7, for example a confirmation button, the drum starts to rotate.
- Position of the drum 90°: It is also the rest position, when the opening of the drum does not face.the user and therefore he or she cannot introduce any garment 4 (see Figure 1A). It is also an intermediate position in the rotation of the drum during the process for verifying the clothes delivered and its dumping in the garment collection container 10 (see Figure 1C).
- Position of the drum 180° (see Figure 1D): When the drum reaches this position, after the user has accepted the reading of the machine, it is weighed and/or analyzed if the extraction of pens or metal objects has been forgotten, depending on the detection means installed in the machine.
- Position of the drum 270° (see Figure 1E): If everything is correct, the drum continues rotating until a position in which the garments fall to garment collection container 10 and the drum returns to the rest position (position of the drum 90°).

The garment collection container 10 can be removed, with the garments already suitably collected, checked and counted, by opening the extraction door 11 of the container shown in Figure 2, a front view of the collection machine. In said Figure 2 the drum is in the position of Figure 1B, showing its discontinuous section 2 to the user so that he or she can introduce the garments 4.

The receptacle where the user returns the garments (i.e., the garment collection unit 1) can be cylindrical (of a drum type) or of a box type.

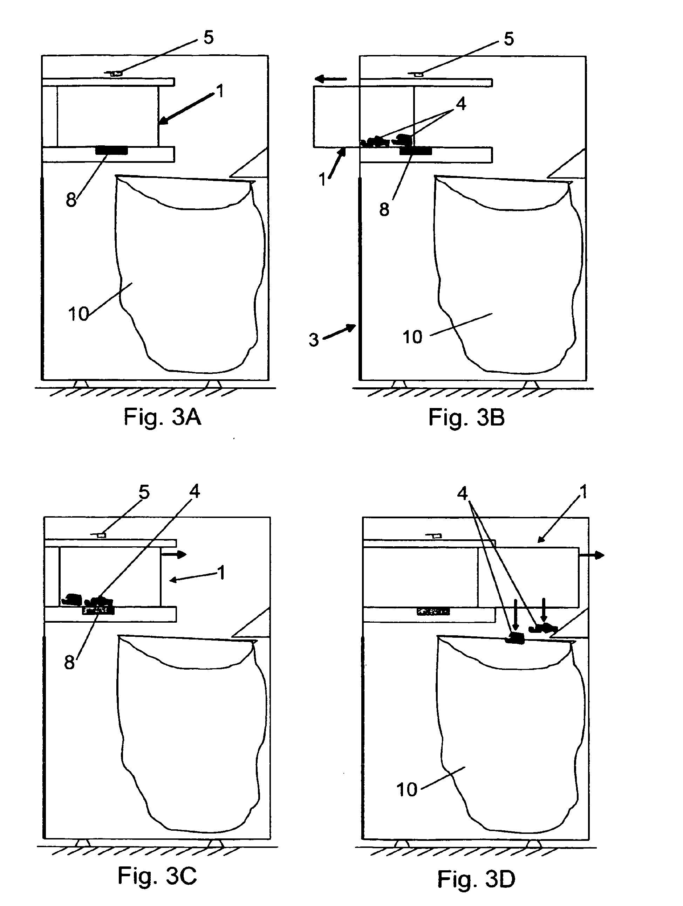

In the event that it is of a box type, the box is horizontally arranged and can be moved by the action of the drive means, the latter being able to manual or motor-driven. The detection means 8 are arranged inside the machine, below the box. The RFID reader is arranged inside the machine above the box. The box has three positions, as shown in Figures 3A, 3B, 3C and 3D:
- First position (see Figure 3B): Start position in which the user can deliver the garments 4 into the box.
- Second position (see Figure 3C): the box moves horizontally into the machine 3 to an intermediate and inner position of the machine in which the garments 4 are identified and the measurements are controlled in the same position but at different times.
- Position 3 (see Figure 3D): movement of the box until the garments 4 fall to the container 10 of the garments 4 through a gap in the lower movement area of the box.

The box is initially in the rest position indicated in Figure 3A, with one of the side walls facing the user so that he or she cannot access the interior of the box or introduce clothes. Once the user is authenticated and validated, the box moves outwards to the initial position indicated in Figure 3B.

The information of the authenticated user together with the identification of the garments returned by this user can furthermore be used to keep a control of the garments returned per user. Furthermore, the laundry can use the information captured by the RFID reader 5 to know beforehand the type of garments in the bag, their color, material, etc., because this information can be stored in the RFID tag placed in each garment 4. This information can be printed in the actual collection machine, using a small printer therein, and placed in the bag 10, or it can also be transmitted by a network to a computer system in contact with the laundry through a network card; for example.

In the event that upon placing the garments 4 in the garment collection unit 1, the user indicates to the machine that the garments 4 delivered have problems (greases requiring energetic washing, holes requiring sewing, etc.), this indication will be carried out by pressing a special process button. Upon activating said button, the RFID tags will be marked with a bit in their local memory so that when they are processed in the laundry, these garments are separated from the normal process.

## Claims

1. A garment collection machine (3) for a laundry, each garment having an RFID tag for its identification, **characterized in that** said machine (3) comprises:
- a garment collection unit (1) in which the user introduces the garments (4) to be returned when said unit (1) is in a garment return position;
- drive means for driving the garment collection unit (1);
- an RFID reader (5) in charge of reading the RFID tags of the garments (4) introduced by the user in the garment collection unit (1);
- data processing means receiving the information from the RFID reader (5) and counting the garments (4) read, the garment collection machine (3) indicating to the user the number of garments read by the RFID reader (5);
- confirmation means (7) through which the user confirms the correct count of the garments (4) read by the machine (3) and initiates the process for returning the garments;
- detection means (8) located in the garment collection unit (1) which detect, once the process for returning the garments (4), has been initiated, an anomalous situation in the garments (4) introduced, the machine (3) positioning the garment collection unit (1) in a garment (4) return position in the event of detection of an anomalous situation;
- a garment collection container (10), located below said garment collection unit (1);
and **in that**, once the process for returning the garments (4) has been initiated and in the event that an anomalous situation has not been detected, the garment collection unit (1) is driven by the drive means, the garments (4) being deposited in the garment collection container (10).

2. The garment collection machine (3) according to claim 1, **characterized in that** the garment collection unit consists of a drum (1) that is partially discontinuous in a section (2), the user introducing the garments (4) to be returned through such discontinuity;
**in that** the drive means for driving the drum (1) comprise an electric motor causing a rotation of the drum (1) when said means are activated;
and **in that** in the event that an anomalous situation is detected, the drum (1) rotates until placing its discontinuous section (2) facing the garment collection container (10).

3. The garment collection machine (3) according to claim 2, **characterized in that** once the process for returning the garments (4) has been initiated, the drum (1) rotates such that the continuous section of the drum (1) is oriented, preventing the user from being able to extract any previously introduced garment (4).

4. The garment collection machine (3) according to any of the previous claims, **characterized in that** the RFID reader (5) is placed in the lower part of the drum (1) when the latter is in the garment return position.

5. The garment collection machine (3) according to claim 1, **characterized in that** the garment collection unit (1) consists of a horizontally arranged box without a base, and **in that** once the process for returning garments has been initiated, the box moves horizontally on runners by the action of the drive means, until depositing the garments (4) in the garment collection container (10).

6. The garment collection machine (3) according to any of the previous claims, **characterized in that** the detection means (8) comprise at least one of the following:
- magnetic detection means, the machine (3) considering that there is an anomalous situation when said magnetic detection means detect the presence of metal elements among the introduced garments (4);
- means for weighing the content of the garment collection unit (1), the machine (3) considering that there is an anomalous situation when an introduced garment (4) weighs less than a previously established value.

7. The garment collection machine (3) according to any of the previous claims, **characterized in that** the machine (3) has user authentication means configured so that once the user has been authenticated, he or she can initiate the process for returning garments (4).

8. The garment collection machine (3) according to claim 7 when it depends on claim 2, **characterized in that** once the user is authenticated, the machine (3) rotates the drum (1) from an initial position in which its continuous section faces the user, to the garment return position.

9. The garment collection machine (3) according to claim 7 when it depends on claim 5, **characterized in that** once the user is authenticated, the machine (3) moves the box horizontally from an initial position in which one of its side walls faces the user, to the garment return position.

10. The garment collection machine (3) according to any of the previous claims, **characterized in that** the machine (3) additionally has data input means by means of which the user can select any special characteristic of the garments (4).

## Patentansprüche

1. Maschine (3) zum Einsammeln von Kleidungsstücken für eine Wäscherei, wobei jedes Kleidungsstück ein RFID-Etikett zu dessen Kennzeichnung aufweist, **dadurch gekennzeichnet, dass** die Maschine (3) umfasst:
- eine Kleidungsstückeinsammeleinheit (1), in die der Benutzer die zurückzugebenden Kleidungsstücke (4) eingibt, wenn sich die Einheit (1) in einer Kleidungsstückrückgabeposition befindet;
- Antriebsmittel zum Antreiben der Kleidungsstückeinsammeleinheit (1);
- ein RFID-Lesegerät (5), das zum Lesen der RFID-Etiketten der vom Benutzer in die Kleidungsstückeinsammeleinheit (1) eingegebenen Kleidungsstücke (4) dient;
- Datenverarbeitungsmittel, welche die Informationen von dem RFID-Lesegerät (5) empfangen und die gelesenen Kleidungsstücke (4) zählen, wobei die Kleidungsstücksammelmaschine (3) dem Benutzer die durch das RFID-Lesegerät (5) gelesene Anzahl von Kleidungsstücken anzeigt;
- Bestätigungsmittel (7), mit denen der Benutzer den richtigen Zählwert der durch die Maschine (3) gelesenen Kleidungsstücke (4) bestätigt und den Vorgang zur Rückgabe der Kleidungsstücke startet;
- Detektiermittel (8), die in der Kleidungsstückeinsammeleinheit (1) angeordnet sind und, sobald der Vorgang zur Rückgabe der Kleidungsstücke (4) gestartet wurde, eine abnormale Situation bei den eingegebenen Kleidungsstücken (4) erkennen, wobei die Maschine (3) im Fall des Erkennens einer abnormalen Situation die Kleidersammeleinheit (1) in einer Kleidungsstückrückgabeposition positioniert;
- einen Kleidungsstücksammelbehälter (10), der unterhalb der Kleidungsstückeinsammeleinheit (1) angeordnet ist;
und dadurch, dass, sobald der Vorgang zur Rückgabe der Kleidungsstücke (4) gestartet wurde und falls keine abnormale Situation erkannt wurde, die Kleidungsstückeinsammeleinheit (1) durch die Antriebsmittel angetrieben wird, wobei die Kleidungsstücke (4) in den Kleidungsstücksammelbehälter (10) eingegeben werden.

2. Maschine (3) zum Einsammeln von Kleidungsstücken nach Anspruch 1, **dadurch gekennzeichnet, dass** die Kieidungsstückeinsammeieinheit aus einer Trommel (1) besteht, die in einem Abschnitt (2) zum Teil unterbrochen ist, wobei der Benutzer die zurückzugebenden Kleidungsstücke (4) durch diese Unterbrechung eingibt;
dadurch, dass die Antriebsmittel zum Antreiben der Trommel (1) einen Elektromotor umfassen, der eine Rotation der Trommel (1) herbeiführt, wenn die Mittel aktiviert sind;
und **dadurch**, dass sich im Falle, dass eine abnormale Situation erkannt wird, die Trommel (1) dreht, bis ihr unterbrochener Abschnitt (2) dem Kleidungsstücksammelbehälter (10) zugewandt positioniert ist.

3. Maschine (3) zum Einsammeln von Kleidungsstücken nach Anspruch 2, **dadurch gekennzeichnet, dass** sich, sobald der Vorgang zur Rückgabe der Kleidungsstücke (4) gestartet wurde, die Trommel (1) dreht, derart, dass der durchgehende Abschnitt der Trommel (1) derart ausgerichtet ist, dass verhindert wird, dass der Benutzer jedwedes zuvor eingegebene Kleidungsstück (4) entnehmen kann.

4. Maschine (3) zum Einsammeln von Kleidungsstücken nach einem beliebigen der vorhergehenden Ansprüche, **dadurch gekennzeichnet, dass** das RFID-Lesegerät (5) in dem unteren Teil der Trommel (1) angeordnet ist, wenn sich letztere in der Kleidungsstückrückgabeposition befindet.

5. Maschine (3) zum Einsammeln von Kleidungsstücken nach Anspruch 1, **dadurch gekennzeichnet, dass** die Kleidungsstückeinsammeleinheit (1) aus einem waagrecht angeordneten kistenförmigen Behälter ohne Basis besteht und dass sich, sobald der Vorgang zur Rückgabe von Kleidungsstücken gestartet wurde, der kistenförmige Behälter durch die Wirkung der Antriebsmittel waagrecht auf Laufeinrichtungen bewegt, bis die Kleidungsstücke (4) in den Kleidungsstücksammelbeliälter (10) eingegeben werden.

6. Maschine (3) zum Einsammeln von Kleidungsstücken nach einem beliebigen der vorhergehenden Ansprüche, **dadurch gekennzeichnet, dass** die Detektiermittel (8) mindestens eines der folgenden umfassen:
- magnetische Detektiermittel, wobei die Maschine (3) davon ausgeht, dass eine abnormale Situation vorliegt, wenn die magnetischen Detektiermittel das Vorliegen von Metallelementen unter den eingegebenen Kleidungsstücken (4) erkennen.
- Mittel zum Wiegen des Inhalts der Kleidungsstückeinsammeieinheilt (1), wobei die Maschine (3) davon ausgeht, dass eine abnormale Situation vorliegt, wenn ein eingegebenes Kleidungsstück (4) weniger wiegt als ein zuvor festgelegter Wert.

7. Maschine (3) zum Einsammeln von Kleidungsstücken nach einem beliebigen der vorhergehenden Ansprüche, **dadurch gekennzeichnet, dass** die Maschine (3) Benutzerauthentifizierungsmittel aufweist, die derart konfiguriert sind, dass, sobald der Benutzer authentifiziert wurde, dieser den Vorgang zur Rückgabe von Kleidungsstücken (4) starten kann.

8. Maschine (3) zum Einsammeln von Kleidungsstücken nach Anspruch 7, wenn dieser von Anspruch 2 abhängt, **dadurch gekennzeichnet, dass,** sobald der Benutzer authentifiziert wurde, die Maschine (3) die Trommel (1) von einer Ausgangsposition, in der ihr durchgehender Abschnitt dem Benutzer zugewandt ist, in die Kleidungsstückrückgabeposition dreht.

9. Maschine (3) zum Einsammeln von Kleidungsstücken nach Anspruch 7, wenn dieser von Anspruch 5 abhängt, **dadurch gekennzeichnet, dass,** sobald der Benutzer authentifiziert wurde, die Maschine (3) den kistenförmigen Behälter horizontal von einer Ausgangsposition, in der eine seiner Seitenwände dem Benutzer zugewandt ist, in die Kleidungsstückrückgabeposition bewegt.

10. Maschine (3) zum Einsammeln von Kleidungsstücken nach einem beliebigen der vorhergehenden Ansprüche, **dadurch gekennzeichnet, dass** die Maschine (3) darüber hinaus Dateneingabemittel aufweist, mit denen der Benutzer jedwede besondere Eigenschaft der Kleidungsstücke (4) auswählen kann.

## Revendications

1. Machine de collecte de vêtements (3) pour une blanchisserie, chaque vêtement ayant une étiquette RFID pour son identification, **caractérisée en ce que** ladite machine (3) comprend :
une unité de collecte de vêtements (1) dans laquelle l'utilisateur introduit les vêtements (4) destinés à revenir lorsque ladite unité (1) est dans une position de retour de vêtement ;
des moyens d'entraînement pour entraîner l'unité de collecte de vêtements (1) ;
un lecteur RFID (5) en charge de lire les étiquettes RFID des vêtements (4) introduits par l'utilisateur dans l'unité de collecte de vêtements (1)
des moyens de traitement de données recevant l'information provenant du lecteur RFID (5) et comptant les vêtements (4) lus, la machine de collecte de vêtements (3) indiquant à l'utilisateur le nombre de vêtements lus par le lecteur RFID (5) ;
des moyens de confirmation (7) grâce auxquels l'utilisateur confirme le nombre exact de vêtements (4) lus par la machine (3) et déclenche le procédé pour faire revenir les vêtements ;
des moyens de détection (8) situés dans l'unité de collecte de vêtements (1) qui détectent une fois que le procédé pour le retour des vêtements (4) a été initié, une situation anormale dans les vêtements (4) introduits, la machine (3) positionnant l'unité de collecte de vêtements (1) dans une position de retour de vêtement (4) dans le cas d'une détection d'une situation anormale ;
un récipient de collecte de vêtements (10) situé au-dessous de ladite unité de collecte de vêtements (1) ;
et **en ce que**, une fois que le procédé pour faire revenir les vêtements (4) a été initié et dans le cas dans lequel une situation anormale n'a pas été détectée, l'unité de collecte de vêtements (1) est entraînée par les moyens d'entraînement, les vêtements (4) étant déposés dans le récipient de collecte de vêtements (10).

2. Machine de collecte de vêtements (3) selon la revendication 1, **caractérisée en ce que** l'unité de collecte de vêtements se compose d'un tambour (1) qui est partiellement discontinu dans une section (2), l'utilisateur introduisant les vêtements (4) destinés à être retournés par une telle discontinuité ;
**en ce que** les moyens d'entraînement pour entraîner le tambour (1) comprennent un moteur électrique provoquant une rotation du tambour (1) lorsque lesdits moyens sont activés ;
et **en ce que** dans le cas dans lequel une situation anormale est détectée, le tambour (1) tourne jusqu'à placer sa section discontinue (2) en face du récipient de collecte de vêtements (10).

3. Machine de collecte de vêtements (3) selon la revendication 2, **caractérisée en ce qu'**une fois que le procédé pour faire revenir les vêtements (4) a été initié, le tambour (1) tourne de sorte que la section continue du tambour (1) est orientée, empêchant l'utilisateur de pouvoir extraire tout vêtement (4) préalablement introduit.

4. Machine de collecte de vêtements (3) selon l'une quelconque des revendications précédentes, **caractérisée en ce que** le lecteur RFID (5) est placé dans la partie inférieure du tambour (1) lorsque ce dernier est dans la position de retour de vêtement.

5. Machine de collecte de vêtements (3) selon la revendication 1, **caractérisée en ce que** l'unité de collecte de vêtements (1) se compose d'une boîte agencée de manière horizontale sans base, et **en ce qu'**une fois que le procédé pour faire revenir les vêtements a été initié, la boîte se déplace horizontalement sur des rails par l'action des moyens d'entraînement, jusqu'à déposer les vêtements (4) dans le récipient de collecte de vêtements (10).

6. Machine de collecte de vêtements (3) selon l'une quelconque des revendications précédentes, **caractérisée en ce que** les moyens de détection (8) comprennent au moins l'un parmi les éléments suivants :
des moyens de détection magnétique, la machine (3) considérant qu'il y a une situation anormale lorsque lesdits moyens de détection magnétique détectent la présence d'élément métallique parmi les vêtements introduits (4) ;
des moyens pour peser le contenu de l'unité de collecte de vêtements (1), la machine (3) considérant qu'il existe une situation anormale lorsqu'un vêtement (4) introduit pèse moins qu'une valeur préalablement établie.

7. Machine de collecte de vêtements (3) selon l'une quelconque des revendications précédentes, **caractérisée en ce que** la machine (3) a des moyens d'authentification d'utilisateur configurés de sorte qu'une fois que l'utilisateur a été authentifié, il ou elle peut initier le procédé pour faire revenir les vêtements (4).

8. Machine de collecte de vêtements (3) selon la revendication 7 lorsqu'elle dépend de la revendication 2, **caractérisée en ce qu'**une fois que l'utilisateur a été authentifié, la machine (3) fait tourner le tambour (1) d'une position initiale dans laquelle sa section continue fait face à l'utilisateur, jusqu'à la position de retour de vêtement.

9. Machine de collecte de vêtements (3) selon la revendication 7 lorsqu'elle dépend de la revendication 5, **caractérisée en ce qu'**une fois que l'utilisateur a été authentifié, la machine (3) déplace la boîte de manière horizontale à partir d'une position initiale dans laquelle l'une de ses parois latérales fait face à l'utilisateur, jusqu'à une position de retour de vêtement.

10. Machine de collecte de vêtements (3) selon l'une quelconque des revendications précédentes, **caractérisée en ce que** la machine (3) a en outre des moyens d'entrée de données au moyen desquels l'utilisateur peut sélectionner n'importe quelle caractéristique spéciale des vêtements (4).
